# EUROPEAN PATENT APPLICATION

(11) **EP 2 759 566 A1**
(43) Date of publication of application: **30.07.2014**
(21) Application number: 12833278.0
(22) Date of filing: 18.09.2012
(51) Int. Cl.: C08J 9/04, B32B 5/22, B32B 25/04, B32B 27/00, C08K 5/14, C08K 5/33, C08L 23/16, C08L 71/02, C09K 3/10, C09K 21/08

(54) **ETYLENE-PROPYLENE-DIENE RUBBER FOAM AND SEAL MATERIAL**

(30) Priority: 21.09.2011 JP 2011206298; 27.08.2012 JP 2012186695
(71) Applicant: Nitto Denko Corporation, Ibaraki-shi, Osaka 567-8680 (JP)
(72) Inventor: KAWATA, Joji, Ibaraki-shi Osaka 567-8680 (JP); IWASE, Takayuki, Ibaraki-shi Osaka 567-8680 (JP)
(74) Representative: Schwabe - Sandmair - Marx
(86) International application number: PCT/JP2012/073808
(87) International publication number: WO 2013/042651

(57) **Abstract**

An ethylene-propylene-diene rubber foamed material includes a foamed material of a rubber composition containing an ethylene-propylene-diene rubber, a foaming agent, a flame retardant, an organic peroxide, and a derivative of p-quinonedioxime. The flame retardant contains a halogen flame retardant.

## Description

### Technical Field

The present invention relates to an ethylene-propylene-diene rubber foamed material and a sealing material including the ethylene-propylene-diene rubber foamed material, to be specific, to an ethylene-propylene-diene rubber foamed material preferably used as a sealing material for various industrial products and a sealing material including the ethylene-propylene-diene rubber foamed material.

### Background Art

As a sealing material for various industrial products, an EPDM foamed material obtained by foaming an ethylene-propylene-diene rubber (hereinafter, may be abbreviated as an EPDM) has been conventionally known.

An EPDM foamed material is generally produced by foaming an EPDM with a foaming agent and cross-linking the EPDM with sulfur. When the EPDM is cross-linked with the sulfur, however, there may be a case where depending on a type of a member to be sealed, the member is corroded by the sulfur that remains in the EPDM foamed material.

Thus, in order to reduce the corrosive properties, for example, an ethylene-propylene-diene rubber foamed material obtained by foaming a rubber composition containing an EPDM, a quinoid-based cross-linking agent, and an organic peroxide-based cross-linking agent and furthermore, a cross-linking auxiliary (a vulcanizing retardant) such as thiazoles and thioureas has been proposed (ref: for example, the following Patent Document 1).

### Prior Art Document

### Patent Document

Patent Document 1: Japanese Unexamined Patent Publication No. 2008-208256

### Summary of the Invention

### Problems to be solved by the Invention

In the ethylene-propylene-diene rubber foamed material described in the above-described Patent Document 1, a sulfur atom content thereof is suppressed and the corrosive properties are capable of being reduced.

On the other hand, for example, the ethylene-propylene-diene rubber foamed material may be required to have flexibility and furthermore, flame retardancy, depending on its use.

It is an object of the present invention to provide an ethylene-propylene-diene rubber foamed material that is capable of achieving a reduction in the corrosive properties and has excellent flexibility and flame retardancy and a sealing material including the ethylene-propylene-diene rubber foamed material.

### Solution to the Problems

An ethylene-propylene-diene rubber foamed material of the present invention includes a foamed material of a rubber composition containing an ethylene-propylene-diene rubber, a foaming agent, a flame retardant, an organic peroxide, and a derivative of p-quinonedioxime, wherein the flame retardant contains a halogen flame retardant.

In the ethylene-propylene-diene rubber foamed material of the present invention, it is preferable that the derivative of the p-quinonedioxime is p,p'-dibenzoylquinonedioxime.

In the ethylene-propylene-diene rubber foamed material of the present invention, it is preferable that the rubber composition fails to contain a vulcanizing retardant containing a sulfur atom.

In the ethylene-propylene-diene rubber foamed material of the present invention, it is preferable that in the rubber composition, an ethylene-propylene-diene rubber has long chain branching.

In the ethylene-propylene-diene rubber foamed material of the present invention, it is preferable that the rubber composition further contains a cross-linking auxiliary and the cross-linking auxiliary contains a polyol.

In the ethylene-propylene-diene rubber foamed material of the present invention, it is preferable that the polyol is a polyethylene glycol.

In the ethylene-propylene-diene rubber foamed material of the present invention, it is preferable that the organic peroxide is α,α'-di(t-butylperoxy)diisopropyl benzene.

In the ethylene-propylene-diene rubber foamed material of the present invention, it is preferable that the ethylene-propylene-diene rubber foamed material has a 50 % compressive load value of 0.1 to 2.0 N/cm².

A sealing material of the present invention includes the above-described ethylene-propylene-diene rubber foamed material and a pressure-sensitive adhesive layer provided on at least one surface of the ethylene-propylene-diene rubber foamed material.

### Effect of the Invention

The ethylene-propylene-diene rubber foamed material of the present invention is cross-linked with an organic peroxide and a derivative of p-quinonedioxime, so that a content of a sulfur atom is capable of being reduced and as a result, a reduction in the corrosive properties is capable of being achieved. Furthermore, the ethylene-propylene-diene rubber foamed material cross-linked with the organic peroxide and the derivative of the p-quinonedioxime has excellent flexibility, so that a member is capable of being sealed with excellent fittability and excellent followability to irregularities.

In the ethylene-propylene-diene rubber foamed material of the present invention, a rubber composition before foaming contains a halogen flame retardant, so that the ethylene-propylene-diene rubber foamed material has excellent flame retardancy.

The sealing material of the present invention includes the above-described ethylene-propylene-diene rubber foamed material, so that corrosion of a member is capable of being suppressed, the member is capable of being sealed with excellent fittability and excellent followability to irregularities, and furthermore, the sealing material has excellent flame retardancy.

### Brief Description of the Drawings

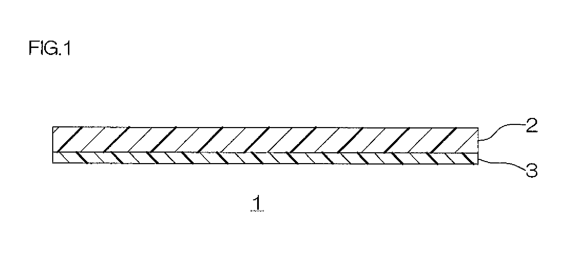

[FIG. 1] FIG. 1 shows a schematic sectional view illustrating one embodiment of a sealing material of the present invention.

### Embodiment of the Invention

An ethylene-propylene-diene rubber (hereinafter, may be referred to as an EPDM) foamed material of the present invention is obtained by foaming a rubber composition containing an EPDM, a foaming agent, a flame retardant, an organic peroxide, and a derivative of p-quinonedioxime.

The EPDM is a rubber obtained by copolymerization of ethylene, propylene, and dienes. The further copolymerization of the dienes, in addition to the ethylene and the propylene, allows introduction of an unsaturated bond and enables cross-linking with a cross-linking agent.

Examples of the dienes include 5-ethylidene-2-norbornene, 1,4-hexadiene, and dicyclopentadiene. These dienes can be used alone or in combination of two or more.

As the dienes, preferably 5-ethylidene-2-norbornene and dicyclopentadiene are used.

In the present invention, a content of the dienes (a diene content) in the EPDM is, for example, 1 to 20 mass %, preferably 2 to 20 mass %, or more preferably 3 to 15 mass %. When the content of the dienes is less than the above-described range, surface shrinkage may occur in the EPDM foamed material to be obtained. When the content of the dienes is above the above-described range, a crack may occur in the EPDM foamed material.

A preferable example of the EPDM includes an EPDM having long chain branching.

A method for introducing a long branched chain into the EPDM is not particularly limited and a known method is used.

The EPDM is produced with a catalyst such as a Ziegler-Natta catalyst or a metallocene catalyst. Preferably, in view of obtaining a long branched chain, a metallocene catalyst is used.

When the EPDM has long chain branching, the elongational viscosity is increased due to the entanglement of the side chain, so that the rubber composition is capable of being excellently foamed.

Examples of the foaming agent include an organic foaming agent and an inorganic foaming agent.

Examples of the organic foaming agent include an azo foaming agent such as azodicarbonamide (ADCA), barium azodicarboxylate, azobisisobutylonitrile (AIBN), azocyclohexylnitrile, and azodiaminobenzene; an N-Nitroso foaming agent such as N,N'-dinitrosopentamethylenetetramine (DTP), N,N'-dimethyl-N,N'-dinitrosoterephthalamide, and trinitrosotrimethyltriamine; a hydrazide foaming agent such as 4,4'-oxybis(benzenesulfonylhydrazide) (OBSH), paratoluenesulfonylhydrazide, diphenylsulfone-3,3'-disulfonylhydrazide, 2,4-toluenedisulfonylhydrazide, p,p-bis(benzenesulfonylhydrazide)ether, benzene-1,3-disulfonylhydrazide, and allylbis(sulfonylhydrazide); a semicarbazide foaming agent such as p-toluylenesulfonylsemicarbazide and 4,4'-oxybis(benzenesulfonylsemicarbazide); a fluorinated alkane foaming agent such as trichloromonofluoromethane and dichloromonofluoromethane; a triazole-based foaming agent such as 5-morpholyl-1,2,3,4-thiatriazole; and other known organic foaming agents. Also, an example of the organic foaming agent includes thermally expansive microparticles in which a heat-expandable substance is encapsulated in a microcapsule. An example of the thermally expansive microparticles can include a commercially available product such as Microsphere (trade name, manufactured by Matsumoto Yushi-Seiyaku Co., Ltd.).

Examples of the inorganic foaming agent include hydrogencarbonate such as sodium hydrogen carbonate and ammonium hydrogen carbonate; carbonate such as sodium carbonate and ammonium carbonate; nitrite such as sodium nitrite and ammonium nitrite; borohydride salt such as sodium borohydride; azides; and other known inorganic foaming agents. Preferably, an azo foaming agent is used. These foaming agents can be used alone or in combination of two or more.

The mixing ratio of the foaming agent with respect to 100 parts by mass of the EPDM is, for example, 0.1 to 50 parts by mass, or preferably 1 to 30 parts by mass.

The flame retardant contains, as an essential component, a halogen flame retardant.

The halogen flame retardant is a flame retardant containing, in a molecule, a halogen atom (for example, fluorine, chlorine, bromine, iodine, and the like). To be specific, examples thereof include a chlorine-based flame retardant such as chlorinated paraffne, chlorinated polyolefin, and perchlorocyclopentadecane and a bromine-based flame retardant such as hexabromobenzene, ethylenebispentabromodiphenyl, and decabromodiphenyl oxide.

These halogen flame retardants can be used alone or in combination of two or more.

As the halogen flame retardant, preferably, a bromine-based flame retardant is used, or more preferably, ethylenebispentabromodiphenyl is used.

The mixing ratio (in the case of being used in combination, the total amount thereof) of the halogen flame retardant with respect to 100 parts by mass of the EPDM is, for example, 5 to 300 parts by mass, preferably 10 to 200 parts by mass, or more preferably 50 to 150 parts by mass.

The flame retardant can contain, as an arbitrary component, another flame retardant (a non-halogen flame retardant).

The non-halogen flame retardant is a flame retardant that fails to contain, in a molecule, a halogen atom. To be specific, examples thereof include calcium hydroxide, magnesium hydroxide, and aluminum hydroxide.

These non-halogen flame retardants can be used alone or in combination of two or more.

When the halogen flame retardant and the non-halogen flame retardant are used in combination, in the mixing ratio thereof, the ratio of the non-halogen flame retardant with respect to 100 parts by mass of the halogen flame retardant is, for example, 10 to 200 parts by mass, or preferably 50 to 150 parts by mass.

The mixing ratio (the total amount) of the halogen flame retardant and the non-halogen flame retardant with respect to 100 parts by mass of the EPDM is, for example, 5 to 400 parts by mass, preferably 50 to 350 parts by mass, or more preferably 150 to 300 parts by mass.

The organic peroxide is an organic compound (an organic peroxide-based cross-linking agent) having a peroxide structure that is used as a cross-linking agent. To be specific, examples thereof include dicumyl peroxide (a one-minute half-life temperature: 175°C), dimethyl di(t-butylperoxy)hexane (a one-minute half-life temperature: 180°C), 1,1-di(t-butylperoxy)cyclohexane (a one-minute half-life temperature: 154°C), and α,α'-di(t-butylperoxy)diisopropyl benzene (a one-minute half-life temperature: 175°C).

These organic peroxides can be used alone or in combination of two or more.

As the organic peroxide, preferably an organic peroxide having a one-minute half-life temperature of 150°C or more is used, more preferably an organic peroxide having a one-minute half-life temperature of 170°C or more is used, or particularly preferably, α,α'-di(t-butylperoxy)diisopropyl benzene is used.

When the organic peroxide is used, the rubber composition is capable of being excellently cross-linked, so that excellent flexibility is capable of being ensured.

The mixing ratio (in the case of being used in combination, the total amount thereof) of the organic peroxide with respect to 100 parts by mass of the EPDM is, for example, 0.05 to 20 parts by mass, preferably 0.5 to 15 parts by mass, or more preferably 1 to 10 parts by mass.

The derivative of the p-quinonedioxime is a compound (a quinoid-based cross-linking agent) having a p-quinonedioxime structure that is used as a cross-linking agent. To be specific, an example thereof includes p,p'-dibenzoylquinonedioxime.

These derivatives of the p-quinonedioxime can be used alone or in combination of two or more.

As the derivative of the p-quinonedioxime, preferably, p,p'-dibenzoylquinonedioxime is used.

When the EPDM is cross-linked with the p,p'-dibenzoylquinonedioxime, the sulfur atom content is capable of being reduced, so that a reduction in the corrosive properties is achieved and excellent foaming properties are capable of being ensured.

The mixing ratio of the derivative of the p-quinonedioxime with respect to 100 parts by mass of the EPDM is, for example, 0.05 to 20 parts by mass, or preferably 0.5 to 10 parts by mass. The mixing ratio thereof with respect to 100 parts by mass of the organic peroxide is, for example, 10 to 4000 parts by mass, or preferably 20 to 1000 parts by mass.

The rubber composition can further contain, as a cross-linking agent, another quinoid-based cross-linking agent (a quinoid compound excluding the derivative of the p-quinonedioxime).

Examples of another quinoid-based cross-linking agent include p-quinonedioxime, poly-p-dinitrosobenzene, and a derivative of poly-p-dinitrosobenzene.

These other quinoid-based cross-linking agents can be used alone or in combination of two or more.

The mixing ratio of another quinoid-based cross-linking agent is appropriately set in accordance with its purpose and use.

Preferably, the rubber composition contains a cross-linking auxiliary and a foaming auxiliary.

A preferable example of the cross-linking auxiliary includes a cross-linking auxiliary that fails to contain a sulfur atom in a molecule. To be specific, examples thereof include a monohydric alcohol such as ethanol, a dihydric alcohol such as ethylene glycol, a trihydric alcohol such as glycerine, and a polyol (polyoxyethylene glycol) such as polyethylene glycol and polypropylene glycol. The polyol has a number average molecular weight of, for example, 200 or more, or preferably 300 or more.

These cross-linking auxiliaries can be used alone or in combination of two or more.

As the cross-linking auxiliary, preferably, a polyol is used.

Among all, when the derivative of the p-quinonedioxime is used as the quinoid compound, preferably, a polyethylene glycol is used.

When the polyethylene glycol is used as the polyol, the rubber composition is capable of being excellently cross-linked, so that excellent flexibility is capable of being ensured.

The mixing ratio of the cross-linking auxiliary with respect to 100 parts by mass of the EPDM is, for example, 0.01 to 20 parts by mass, preferably 0.02 to 15 parts by mass, or more preferably 0.06 to 10 parts by mass.

Examples of the foaming auxiliary include a urea foaming auxiliary, a salicylic acid foaming auxiliary, a benzoic acid foaming auxiliary, and a metal oxide (for example, a zinc oxide and the like). Preferably, a urea foaming auxiliary and a metal oxide are used. These foaming auxiliaries can be used alone or in combination of two or more.

The mixing ratio of the foaming auxiliary with respect to 100 parts by mass of the EPDM is, for example, 0.5 to 20 parts by mass, or preferably 1 to 10 parts by mass.

The rubber composition can appropriately contain a polymer other than the EPDM, a processing auxiliary, a pigment, a filler, a softener, or the like as required.

Examples of the polymer other than the EPDM include a rubber-based polymer and a non-rubber-based polymer. Examples of the rubber-based polymer include a rubber-based copolymer (for example, α-olefin (such as butene-1)-dicyclopentadiene, ethylidene norbomene, and the like) having a cyclic or acyclic polyene having non-conjugated double bonds as a component, an ethylene-propylene rubber, a silicone rubber, a fluororubber, an acrylic rubber, a polyurethane rubber, a polyamide rubber, a natural rubber, a polyisobutylene rubber, a polyisoprene rubber, a chloroprene rubber, a butyl rubber, a nitrile butyl rubber, a styrene-butadiene rubber, a styrene-butadiene-styrene rubber, a styrene-isoprene-styrene rubber, a styrene-ethylene-butadiene rubber, a styrene-ethylene-butylene-styrene rubber, a styrene-isoprene-propylene-styrene rubber, and a chlorosulfonated polyethylene rubber.

Examples of the non-rubber-based polymer include polyethylene, polypropylene, an acrylic polymer (for example, alkyl poly(meth)acrylate and the like), polyvinyl chloride, an ethylene-vinyl acetate copolymer, polyvinyl acetate, polyamide, polyester, chlorinated polyethylene, a urethane polymer, a styrene polymer, a silicone polymer, and an epoxy resin. Preferably, a non-rubber-based polymer is used, or more preferably, polyethylene is used. These polymers other than the EPDM can be used alone or in combination of two or more.

The mixing ratio of the polymer other than the EPDM with respect to 100 parts by mass of the EPDM is, for example, 100 parts by mass or less, or preferably 50 parts by mass or less, and is usually 1 part by mass or more.

Examples of the processing auxiliary include a stearic acid and esters thereof and a zinc stearate. These processing auxiliaries can be used alone or in combination of two or more. The mixing ratio of the processing auxiliary with respect to 100 parts by mass of the EPDM is, for example, 0.1 to 20 parts by mass, or preferably 1 to 10 parts by mass.

An example of the pigment includes carbon black. These pigments can be used alone or in combination of two or more. The mixing ratio of the pigment with respect to 100 parts by mass of the EPDM is, for example, 1 to 50 parts by mass, or preferably 2 to 30 parts by mass.

Examples of the filler include an inorganic filler such as calcium carbonate, magnesium carbonate, silicic acid and salts thereof, clay, talc, mica powders, bentonite, silica, alumina, aluminum silicate, acetylene black, and aluminum powders; an organic filler such as cork; and other known fillers. These fillers can be used alone or in combination of two or more. The mixing ratio of the filler with respect to 100 parts by mass of the EPDM is, for example, 10 to 300 parts by mass, preferably 30 to 200 parts by mass, or more preferably 50 to 200 parts by mass.

When a flame retardant is contained in the rubber composition, it is possible not to contain a filler therein.

Examples of the softener include petroleum oils (for example, paraffinic process oil (paraffinic oil and the like), naphthenic process oil, drying oils, animal and vegetable oils (for example, linseed oil and the like), aromatic process oil, and the like); asphalts; low molecular weight polymers; organic acid esters (for example, phthalic ester (for example, di-2-ethylhexyl phthalate (DOP) and dibutyl phthalate (DBP)), phosphate ester, higher fatty acid ester, alkyl sulfonate ester, and the like); and a thickener. Preferably, petroleum oils are used, or more preferably, paraffinic process oil is used. These softeners can be used alone or in combination of two or more. The mixing ratio of the softener with respect to 100 parts by mass of the EPDM is, for example, 5 to 100 parts by mass, or preferably 10 to 70 parts by mass.

Furthermore, the rubber composition can appropriately contain a known additive as long as it does not damage the excellent effect of the EPDM foamed material to be obtained in accordance with its purpose and use. Examples of the known additive include a plasticizer, an oxidation inhibitor, an antioxidant, a colorant, and a fungicide.

On the other hand, preferably, the rubber composition fails to contain a component containing a sulfur atom, to be specific, a vulcanizing retardant containing a sulfur atom (for example, thiazoles, thioureas, and the like).

When the rubber composition fails to contain a vulcanizing retardant such as thiazoles and thioureas, the sulfur atom content in the EPDM foamed material is capable of being reduced and a reduction in the corrosive properties is capable of being achieved.

Next, a method for producing the EPDM foamed material is described.

In order to produce the EPDM foamed material, first, the above-described components are blended to be kneaded using a kneader, a mixer, a mixing roller, or the like, so that the rubber composition is prepared as a kneaded material (a kneading step).

In the kneading step, the components can be also kneaded, while being appropriately heated. Also, in the kneading step, for example, components other than a cross-linking agent, a cross-linking auxiliary, a foaming agent, and a foaming auxiliary are first kneaded to prepare a first kneaded material. Thereafter, a cross-linking agent, a cross-linking auxiliary, a foaming agent, and a foaming auxiliary are added to the first kneaded material to be kneaded, so that the rubber composition (a second kneaded material) can be obtained. When the first kneaded material is kneaded, a part of the cross-linking auxiliary can be blended therein.

The kneaded rubber composition (the kneaded material) is extruded into a sheet shape or the like using an extruder (a molding step) and the extruded rubber composition is heated to be foamed (a foaming step).

A heat condition is appropriately selected in accordance with a cross-linking starting temperature of the cross-linking agent to be blended, a foaming temperature of the foaming agent to be blended, or the like. The rubber composition is preheated using, for example, an oven with internal air circulation at, for example, 40 to 200°C, or preferably 60 to 160°C for, for example, 1 to 60 minutes, or preferably 5 to 40 minutes. After the preheating, the rubber composition is heated at, for example, 450°C or less, preferably 100 to 350°C, or more preferably 120 to 250°C for, for example, 5 to 80 minutes, or preferably 15 to 50 minutes.

According to the method for producing the EPDM foamed material, corrosion of a member is suppressed and the ethylene-propylene-diene rubber foamed material capable of sealing the member with excellent fittability and excellent followability to irregularities is capable of being easily produced with excellent production efficiency.

The prepared rubber composition is extruded into a sheet shape using an extruder, while being heated (a molding step) and the rubber composition is capable of being continuously cross-linked and foamed (a foaming step).

In this way, the rubber composition is foamed and cross-linked, so that the EPDM foamed material is capable of being obtained.

According to the method for producing the EPDM foamed material, the ethylene-propylene-diene rubber foamed material in a desired shape is capable of being easily and surely produced.

The obtained EPDM foamed material has a thickness of, for example, 0.1 to 50 mm, or preferably 1 to 45 mm.

The obtained EPDM foamed material has an open cell structure (an open cell ratio of 100 %) or a semi-open/semi-closed cell structure (an open cell ratio of above 0 % and less than 100 %, or preferably an open cell ratio of 10 to 98 %).

When the EPDM foamed material has an open cell structure or a semi-open/semi-closed cell structure, the improvement of the flexibility is capable of being achieved and furthermore, the improvement of the filling properties of the EPDM foamed material between the members is capable of being achieved.

The EPDM foamed material has a cell size of, for example, 50 to 1200 µm, preferably 100 to 1000 µm, or more preferably 200 to 800 µm.

By setting the upper limit of the cell size of the EPDM foamed material to, for example, 1200 µm or less, preferably 1000 µm or less, or more preferably 800 µm or less, the sealing properties are capable of being excellent. By setting the lower limit of the cell size of the EPDM foamed material to, for example, 50 µm or more, preferably 100 µm or more, or more preferably 200 µm or more, the flexibility is capable of being excellent.

The EPDM foamed material obtained in this way has a volume expansion ratio (a density ratio before and after foaming) of, for example, two times or more, or preferably five times or more, and of usually 30 times or less.

By setting the volume expansion ratio (the density ratio before and after foaming) of the EPDM foamed material to, for example, two times or more, or preferably five times or more, excellent foaming properties are capable of being ensured and the flexibility is capable of being excellent and furthermore, the EPDM foamed material is allowed to follow the unevenness on the surface to be sealed, so that the sealing properties are capable of being excellent. Also, by setting the volume expansion ratio to usually 30 times or less, the strength of the foamed material is capable of being excellent.

The EPDM foamed material has an apparent density (in conformity with JIS K 6767 (1999)) of, for example, 0.50 g/cm³ or less, or preferably 0.2 g/cm³ or less, and of usually 0.01 g/cm³ or more.

By setting the apparent density of the EPDM foamed material to, for example, 0.50 g/cm³ or less, or preferably 0.2 g/cm³ or less, the flexibility is capable of being excellent and furthermore, the EPDM foamed material is allowed to follow the unevenness on the surface to be sealed, so that the sealing properties are capable of being excellent. Also, by setting the density to usually 0.01 g/cm³ or more, the strength of the foamed material is capable of being excellent.

The EPDM foamed material has a 50 % compressive load value (in conformity with JIS K 6767 (1999)) of, for example, 0.1 to 2.0 N/cm², preferably 0.15 to 1.5 N/cm², or more preferably 0.2 to 1.0 N/cm².

By setting the 50 % compressive load value of the EPDM foamed material to, for example, 0.1 N/cm² or more, preferably 0.15 N/cm² or more, or more preferably 0.2 N/cm² or more, a reduction in the sealing properties caused by allowing the foamed material to become extremely soft is capable of being prevented. By setting the 50 % compressive load value to, for example, 2.0 N/cm² or less, preferably 1.5 N/cm² or less, or more preferably 1.0 N/cm² or less, the flexibility is capable of being excellent and furthermore, the EPDM foamed material is allowed to follow the unevenness on the surface to be sealed, so that the sealing properties are capable of being excellent.

The content ratio of a sulfur atom (the sulfur atom content) in the EPDM foamed material, based on mass, is, for example, 1000 ppm or less, preferably 800 ppm or less, or more preferably 500 ppm or less.

When the content ratio of the sulfur atom in the EPDM foamed material is within the above-described range, a reduction in the corrosive properties is capable of being achieved.

The content ratio of the sulfur atom in the EPDM foamed material is calculated based on the measurement result of a fluorescent X-ray measurement. The detailed conditions in the fluorescent X-ray measurement are described in detail in Examples later.

The sulfur atom content in the EPDM foamed material is capable of being calculated from, for example, the content of the sulfur atom in the material component and is also capable of being obtained by, for example, elemental analysis of the EPDM foamed material.

In the EPDM foamed material, the content ratio of sulfur S₈ calculated based on the measurement result of a gel permeation chromatography, based on mass, is, for example, 10 ppm or less, preferably 5 ppm or less, or more preferably 0 ppm.

When the content ratio of the sulfur S₈ in the EPDM foamed material is within the above-described range, a reduction in the corrosive properties is capable of being achieved.

A calculation method of the sulfur S₈ is described in detail in Examples later.

The EPDM foamed material has a tensile strength (the maximum load in a tensile test in conformity with JIS K 6767 (1999)) of, for example, 1.0 to 50.0 N/cm², or preferably 2.0 to 30.0 N/cm².

When the tensile strength of the EPDM foamed material is set within the range of, for example, 1.0 N/cm² or more, or preferably 2.0 N/cm² or more, and of, for example, 50. 0 N/cm² or less, or preferably 30.0 N/cm² or less, an excellent strength is capable of being obtained, while the flexibility is retained.

The EPDM foamed material has an elongation (in conformity with JIS K 6767 (1999)) of, for example, 10 to 1500 %, or preferably 150 to 1000 %.

When the elongation of the EPDM foamed material is within the range of, for example, 10 % or more, or preferably 150 % or more, and of, for example, 1500 % or less, or preferably 1000 % or less, the strength of the foamed material is capable of being excellent.

The use of the EPDM foamed material is not particularly limited and the EPDM foamed material is capable of being used as, for example, a vibration-proof material, a sound absorbing material, a sound insulation material, a dust-proof material, a heat insulating material, a buffer material, or a water-stop material, which seals a gap between various members for the purpose of, for example, damping, sound absorption, sound insulation, dust-proof, heat insulation, buffering, or water tight.

To be specific, the EPDM foamed material having the above-described properties is cross-linked with the organic peroxide and the derivative of the p-quinonedioxime, so that the content of the sulfur atom is capable of being reduced and as a result, a reduction in the corrosive properties is capable of being achieved. Furthermore, the EPDM foamed material cross-linked with the organic peroxide and the derivative of the p-quinonedioxime has excellent flexibility, so that the member is capable of being sealed with excellent fittability and excellent followability to irregularities.

In the above-described EPDM foamed material, the rubber composition before foaming contains the halogen flame retardant, so that the EPDM foamed material has excellent flame retardancy.

Thus, the EPDM foamed material can be preferably used as a sealing material that is capable of suppressing the corrosive properties and has excellent flame retardancy.

FIG. 1 shows a schematic sectional view illustrating one embodiment of a sealing material of the present invention.

The present invention includes a pressure-sensitive adhesive sealing material (a sealing material) including the above-described EPDM foamed material.

In FIG. 1, a pressure-sensitive adhesive sealing material 1 includes a foamed material layer 2 (after foaming) and a pressure-sensitive adhesive layer 3 provided on one surface (a top surface) of the foamed material layer 2.

The foamed material layer 2 is prepared from the above-described EPDM foamed material and has a thickness of, for example, 0.1 to 50 mm, or preferably 1 to 45 mm.

The pressure-sensitive adhesive layer 3 is formed of, for example, a known pressure-sensitive adhesive.

Examples of the pressure-sensitive adhesive include an acrylic pressure-sensitive adhesive, a rubber pressure-sensitive adhesive, a silicone pressure-sensitive adhesive, a polyester pressure-sensitive adhesive, a urethane pressure-sensitive adhesive, a polyamide pressure-sensitive adhesive, an epoxy pressure-sensitive adhesive, a vinyl alkyl ether pressure-sensitive adhesive, and a fluorine pressure-sensitive adhesive. In addition to these, an example of the pressure-sensitive adhesive also includes a hot melt pressure-sensitive adhesive.

These pressure-sensitive adhesives can be used alone or in combination of two or more.

As the pressure-sensitive adhesive, preferably, an acrylic pressure-sensitive adhesive and a rubber pressure-sensitive adhesive are used.

An example of the acrylic pressure-sensitive adhesive includes a pressure-sensitive adhesive mainly composed of an alkyl (meth)acrylate. The acrylic pressure-sensitive adhesive can be obtained by a known method.

The rubber pressure-sensitive adhesive can be obtained from, for example, a natural rubber and/or a synthetic rubber by a known method. To be specific, examples of a rubber include a polyisobutylene rubber, a polyisoprene rubber, a chloroprene rubber, a butyl rubber, and a nitrile butyl rubber.

A form of the pressure-sensitive adhesive is not particularly limited and various forms such as an emulsion-based pressure-sensitive adhesive, a solvent-based pressure-sensitive adhesive, an oligomer-based pressure-sensitive adhesive, or a solid pressure-sensitive adhesive can be used.

The pressure-sensitive adhesive layer 3 has a thickness of, for example, 10 to 10000 µm, or preferably 50 to 5000 µm.

A method for forming the pressure-sensitive adhesive sealing material 1 is not particularly limited and a known method can be used. To be specific, for example, first, the EPDM foamed material is produced by the above-described method to obtain the foamed material layer 2. Next, the pressure-sensitive adhesive layer 3 is laminated on the top surface of the foamed material layer 2 by a known method. In this way, the pressure-sensitive adhesive sealing material 1 is capable of being formed.

The foamed material layer 2 is prepared from the above-described EPDM foamed material, so that the pressure-sensitive adhesive sealing material 1 has excellent sealing properties and excellent corrosion resistance to metal, and the pressure-sensitive adhesive sealing material 1 also includes the pressure-sensitive adhesive layer 3, so that the foamed material layer 2 is capable of being attached to an arbitrary place. As a result, according to the pressure-sensitive adhesive sealing material 1, a gap between arbitrary members is capable of being excellently sealed by the foamed material layer 2 prepared from the above-described EPDM foamed material without corroding a metal.

In the above-described description, the pressure-sensitive adhesive layer 3 is formed as a substrateless-type pressure-sensitive adhesive tape or sheet that is formed from the pressure-sensitive adhesive only. Alternatively, for example, though not shown, the pressure-sensitive adhesive layer 3 can be also formed as a substrate-including pressure-sensitive adhesive tape or sheet.

In such a case, the pressure-sensitive adhesive layer 3 is, for example, formed as a laminated pressure-sensitive adhesive tape or sheet in which the pressure-sensitive adhesive is provided on at least one surface of the substrate, which is not shown, or preferably is provided on both surfaces of the substrate (the pressure-sensitive adhesive/the substrate/the pressure-sensitive adhesive).

The substrate (not shown) is not particularly limited and examples thereof include a plastic substrate such as a plastic film or sheet; a paper-based substrate such as paper; a fiber-based substrate such as a fabric, a non-woven fabric, and a net; a metal substrate such as a metal foil and a metal plate; a rubber substrate such as a rubber sheet; a foamed substrate such as a foamed sheet; and furthermore, a laminate thereof.

A method for forming the pressure-sensitive adhesive layer 3 as a substrate-including pressure-sensitive adhesive tape or sheet is not particularly limited and a known method can be used.

In the above-described description, the pressure-sensitive adhesive layer 3 is provided on the top surface only of the foamed material layer 2. Alternatively, for example, though not shown, the pressure-sensitive adhesive layer 3 can be also provided on both surfaces (the top surface and the back surface) of the foamed material layer 2.

According to the pressure-sensitive adhesive sealing material 1, the pressure-sensitive adhesive layer 3 is provided on both surfaces of the foamed material layer 2, so that the pressure-sensitive adhesive sealing material 1 (the foamed material layer 2) is capable of being further surely fixed to a gap between the members by the two pressure-sensitive adhesive layers 3 and in this way, the gap is capable of being further surely sealed.

The pressure-sensitive adhesive sealing material 1 includes the above-described ethylene-propylene-diene rubber foamed material, so that a reduction in the corrosive properties is capable of being achieved and to be specific, the pressure-sensitive adhesive sealing material 1 includes the ethylene-propylene-diene rubber foamed material having excellent flexibility and flame retardancy, so that corrosion of the member is capable of being suppressed, the member is capable of being sealed with excellent fittability and excellent followability to irregularities, and furthermore, the pressure-sensitive adhesive sealing material 1 has excellent flame retardancy.

### Examples

While the present invention will be described hereinafter in further detail with reference to Examples and Comparative Examples, the present invention is not limited to these Examples and Comparative Examples.

### (1) Production of EPDM Foamed Material

A resin, a cross-linking auxiliary, a processing auxiliary, a pigment, a flame retardant, a filler, and a softener (in Comparative Example 3, further N,N'-dibutylthiourea) were blended at a mixing amount described in the mixing formulation shown in Table 1 to be kneaded with a 3L pressurizing kneader, so that a first kneaded material was obtained.

Separately, a cross-linking agent, a vulcanizing retardant (excluding N,N'-dibutylthiourea), a foaming agent, and a foaming auxiliary were blended. Thereafter, the obtained mixture was blended into the first kneaded material to be kneaded with a 10-inch mixing roll to obtain a rubber composition (a second kneaded material) (a kneading step).

Next, the rubber composition was extruded into a sheet shape having a thickness of about 8 mm using a single screw extruder (45 mmφ), so that a rubber composition sheet was fabricated (a molding step).

Subsequently, the rubber composition sheet was preheated at 140°C for 20 minutes with an oven with internal air circulation. Thereafter, the temperature of the oven with internal air circulation was increased to 170°C over 10 minutes, so that the rubber composition sheet was heated at 170°C for 10 minutes to be foamed (a foaming step) and in this way, an EPDM foamed material was obtained.

[Table 1]

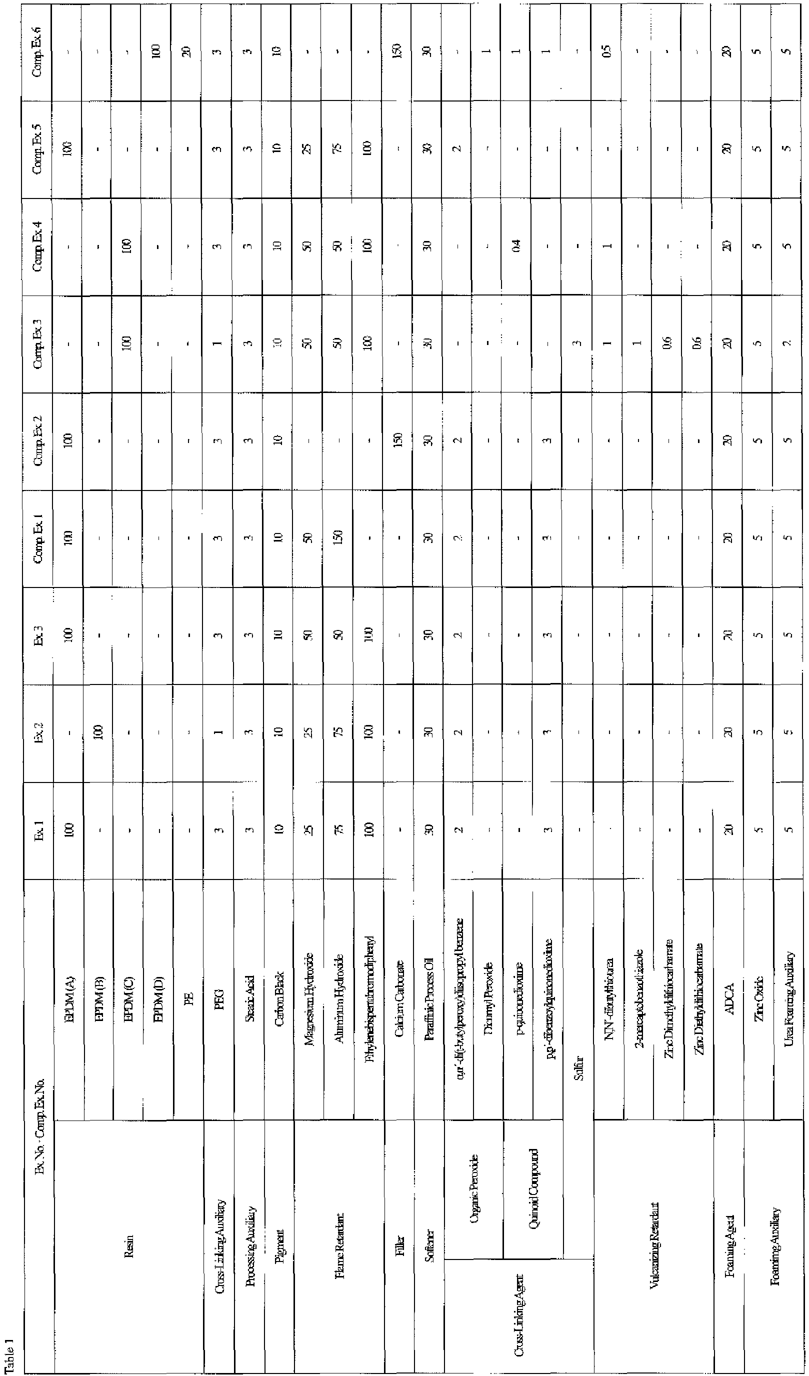

For the abbreviations shown in Table 1, the details are given in the following.

EPDM (A): EPT 1045 (manufactured by Mitsui Chemicals, Inc. a diene (dicyclopentadiene) content of 5.0 mass %), using a Ziegler-Natta catalyst

EPDM (B): EPT 8030M (manufactured by Mitsui Chemicals, Inc., containing long chain branching, a diene (5-ethylidene-2-norbornene) content of 9.5 mass %), using a metallocene catalyst

EPDM (C): Eptalloy PX-047 (manufactured by Mitsui Chemicals, Inc., a diene (5-ethylidene-2-norbornene) content of 4.5 mass %, polyethylene blend type, a polyethylene content of 20 PHR), using a Ziegler-Natta catalyst

EPDM (D): EPT 4045 (manufactured by Mitsui Chemicals, Inc., a diene (5-ethylidene-2-norbornene) content of 8.1 mass %), using a Ziegler-Natta catalyst

PE: Low density polyethylene

PEG: PEG 4000S (polyethylene glycol, a number average molecular weight of 3400)

Zinc Oxide: second-class zinc oxide, manufactured by MITSUI MINING & SMELTING CO., LTD.

Stearic Acid: stearic acid powder "Sakura", manufactured by NOF CORPORATION

Carbon Black: Asahi #50, manufactured by ASAHI CARBON CO., LTD.

Magnesium Hydroxide: KISUMA 5A, manufactured by Kyowa Chemical Industry Co., Ltd.

Aluminum Hydroxide: HIGILITE H-32, manufactured by SHOWA DENKO K.K.

Ethylenebispentabromodiphenyl: SAYTEX 8010, manufactured by ALBEMARLE JAPAN CORPORATION

Calcium Carbonate: N heavy calcium carbonate, manufactured by MARUO CALCIUM CO., LTD.

Paraffinic Process Oil: Diana Process Oil PW-380, manufactured by Idemitsu Kosan Co., Ltd.

α,α'-di(t-butylperoxy)diisopropyl benzene: PERBUTYL P-40MB, a one-minute half-life temperature: 175°C, manufactured by NOF CORPORATION

Dicumyl Peroxide: PERCUMYL D, a one-minute half-life temperature: 175°C, manufactured by NOF CORPORATION

p-quinonedioxime: VULNOC GM, manufactured by OUCHI SHINKO CHEMICAL INDUSTRIAL CO., LTD.

p,p'-dibenzoylquinonedioxime: VULNOC DGM, manufactured by OUCHI SHINKO CHEMICAL INDUSTRIAL CO., LTD.

Sulfur: ALPHAGRAN S-50EN, manufactured by Touchi Co., Ltd.

N,N'-dibutylthiourea: NOCCELER BUR, manufactured by OUCHI SHINKO CHEMICAL INDUSTRIAL CO., LTD.

2-Mercaptobenzothiazole: NOCCELER M, manufactured by OUCHI SHINKO CHEMICAL INDUSTRIAL CO., LTD.

Zinc Dimethyldithiocarbamate: NOCCELER PZ, manufactured by OUCHI SHINKO CHEMICAL INDUSTRIAL CO., LTD.

Zinc Diethyldithiocarbamate: NOCCELER EZ, manufactured by OUCHI SHINKO CHEMICAL INDUSTRIAL CO., LTD.

ADCA (Azodicarbonamide): AC#LQ, manufactured by EIWA CHEMICAL IND. CO., LTD.

Urea Foaming Auxiliary: CELLPASTE K5, manufactured by EIWA CHEMICAL IND. CO., LTD.

### (2) Measurement of Properties

The properties of each of the EPDM foamed materials to be obtained were measured by a method shown in the following. The results are shown in Table 2.

### A) Apparent Density

The apparent density of each of the EPDM foamed materials was measured in conformity with JIS K 6767 (1999). To be specific, a skin layer of each of the EPDM foamed materials in Examples and Comparative Examples was removed and a test piece having a thickness of about 10 mm was prepared. Thereafter, the weight was measured to calculate the weight per unit volume (the apparent density).

### B) 50 % Compressive Load Value

The 50 % compressive load value of each of the EPDM foamed materials was measured in conformity with JIS K 6767 (1999). To be specific, a skin layer of each of the EPDM foamed materials in Examples and Comparative Examples was removed and a test piece having a thickness of about 10 mm was prepared. Thereafter, the test piece was compressed by 50 % at a compression rate of 10 mm/min using a compression testing machine to measure a 50 % compressive load value after 10 seconds of compression.

### C) Sulfur Atom Content (Theoretical Value)

The content of a sulfur atom in the EPDM foamed material was calculated from the content of the sulfur atom in each of material components used in Examples and Comparative Examples.

### D) Sulfur Atom Content (Fluorescent X-Ray Measurement)

Each of the EPDM foamed materials was cut into pieces each having an appropriate size. Four pieces thereof were stacked and were subjected to a fluorescent X-ray measurement (XRF) (measurement size: 30 mmφ). A device and conditions for the XRF are shown in the following.

XRF device: manufactured by Rigaku Corporation, ZXS100e
X-ray source: vertical Rh tube
Analysis area: 30 mmφ
Analysis range of elements: B to U
In addition, the quantification was calculated from the proportion of elemental sulfur in the total atoms that were detected.

### E) Sulfur S₈ Content (GPC Measurement)

The content proportion of Sulfur S₈ was calculated based on the measurement result of a gel permeation chromatography (GPC). A process, conditions, a device, and the like are shown in the following.

### (Process 1)

Each of the EPDM foamed materials was finely cut to fabricate test pieces each having an average value of the maximum length of 5 mm. Next, 300 mg of the EPDM foamed material was weighed and then, 10 ml of THF (tetrahydrofuran) was added thereto using a whole pipette to be allowed to stand overnight.

A THF solution was filtrated with a 0.45 µm membrane filter and the filtrate was subjected to a gel permeation chromatography measurement.

### (Process 2)

Separately, the sulfur S₈ was dissolved into the THF to adjust the concentration to 1000 µg/ml and the THF solution was allowed to stand overnight. Thereafter, the THF solution was filtrated with the 0.45 µm membrane filter.

The filtrate was diluted at predetermined concentrations to fabricate reference solutions. The reference solutions were subjected to the gel permeation chromatography measurement and the calibration curve was drawn from each of the peak area values to be obtained.

### (Process 3)

The mass of the sulfur S₈ in the test piece in the Process 1 was obtained by a calibration curve method based on the calibration curve drawn in the Process 2. The obtained value was divided by the mass (300 mg) of the test piece, so that the content proportion of the sulfur S₈ in the test piece was calculated.

### <Measurement Device and Measurement Conditions>

GPC device: TOSOH HLC-8120 GPC
Column: TSKgel Super HZ2000/HZ2000/HZ1000/HZ1000
Column size: 6.0 mml.D.× 150 mm
Elute: THF
Flow rate: 0.6 ml/min
Detector: UV (280 nm)
Column temperature: 40°C
Injection amount: 20 µl
Detection limit: 10 ppm

### F) Corrosive Properties of Silver

0.5 g of each of the EPDM foamed materials in Examples and Comparative Examples was put into a 100-mL sealed bottle. Polished and cleansed silver (in a plate shape) was attached to the inner side of a lid of the sealed bottle. The resulting bottle was put into a thermostatic chamber at 85°C for seven days and a presence or absence of corrosion of the silver was checked. When the corrosion was not confirmed, the result was evaluated as "Absence". When the corrosion was confirmed, the result was evaluated as "Presence".

### G) UL 94 Horizontal Burning Test

The heat resistance of each of the EPDM foamed materials in Examples and Comparative Examples was evaluated by a horizontal burning test in conformity with the UL 94 standard. The evaluation criteria were the criteria described in 12. Horizontal Burning Test (12.1.4) and (12.1.6) of foamed materials in [Flammability Test for Plastic Material-UL 94 (1997)].

[Table 2]

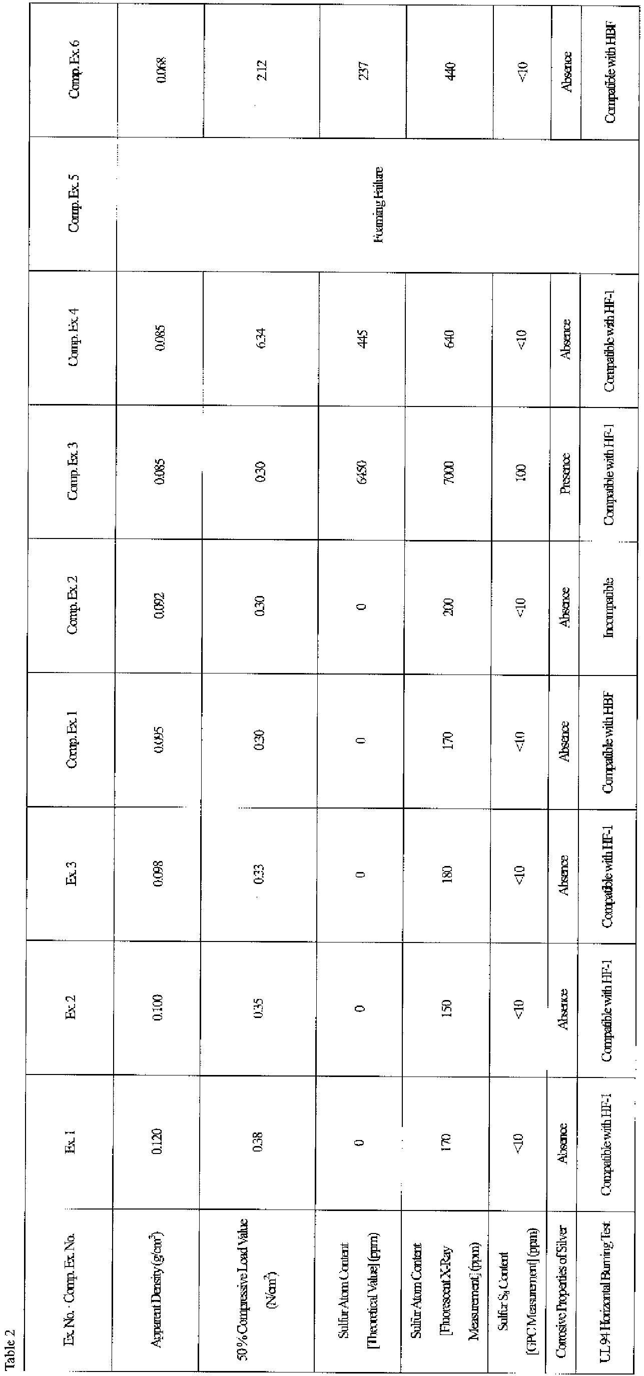

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

The ethylene-propylene-diene rubber foamed material of the present invention is preferably used as a sealing material of various industrial products.

## Claims

1. An ethylene-propylene-diene rubber foamed material comprising:
a foamed material of a rubber composition containing an ethylene-propylene-diene rubber, a foaming agent, a flame retardant, an organic peroxide, and a derivative of p-quinonedioxime, wherein
the flame retardant contains a halogen flame retardant.

2. The ethylene-propylene-diene rubber foamed material according to claim 1, wherein
the derivative of the p-quinonedioxime is p,p'-dibenzoylquinonadioxime.

3. The ethylene-propylene-diene rubber foamed material according to claim 1, wherein
the rubber composition fails to contain a vulcanizing retardant containing a sulfur atom.

4. The ethylene-propylene-diene rubber foamed material according to claim 1, wherein
in the rubber composition, an ethylene-propylene-diene rubber has long chain branching.

5. The ethylene-propylene-diene rubber foamed material according to claim 1, wherein
the rubber composition further contains a cross-linking auxiliary and
the cross-linking auxiliary contains a polyol.

6. The ethylene-propylene-diene rubber foamed material according to claim 5, wherein
the polyol is a polyethylene glycol.

7. The ethylene-propylene-diene rubber foamed material according to claim 1, wherein
the organic peroxide is α,α'-di(t-butylperoxy)diisopropyl benzene.

8. The ethylene-propylene-diene rubber foamed material according to claim 1, wherein
the ethylene-propylene-diene rubber foamed material has a 50 % compressive load value of 0.1 to 2.0 N/cm².

9. A sealing material comprising:
an ethylene-propylene-diene rubber foamed material and a pressure-sensitive adhesive layer provided on at least one surface of the ethylene-propylene-diene rubber foamed material, wherein
the ethylene-propylene-diene rubber foamed material comprises:
a foamed material of a rubber composition containing an ethylene-propylene-diene rubber, a foaming agent, a flame retardant, an organic peroxide, and a derivative of p-quinonedioxime, and
the flame retardant contains a halogen flame retardant.
